**Europäisches Patentamt**

**European Patent Office**

**Office européen des brevets**

(19)

(11) Veröffentlichungsnummer: **0 176 943**

**A2**

(12) ## EUROPÄISCHE PATENTANMELDUNG

(21) Anmeldenummer: **85112143.4**

(22) Anmeldetag: **25.09.85**

(51) Int. Cl.⁴: **B 04 B 1/20**
**C 02 F 1/38**

(30) Priorität: **03.10.84 DE 3436168**

(43) Veröffentlichungstag der Anmeldung:
**09.04.86 Patentblatt 86/15**

(84) Benannte Vertragsstaaten:
**DE FR GB IT SE**

(71) Anmelder: **Klöckner-Humboldt-Deutz
Aktiengesellschaft
Deutz-Mülheimer-Strasse 111 Postfach 80 05 09
D-5000 Köln 80(DE)**

(72) Erfinder: **Epper, Wolfgang
Eichelhäherweg 3
D-5010 Bergheim(DE)**

(72) Erfinder: **Schilp, Reinhold, Dr.
Auf der Kaule 76
D-5060 Bergisch-Gladbach 1(DE)**

(74) Vertreter: **Beisner, Klaus, Dipl.-Ing. et al,
c/o KHD Humboldt Wedag AG Patente und Lizenzen
Wiersbergstrasse Postfach 91 04 57
D-5000 Köln 91(DE)**

(54) **Verfahren und Vorrichtung zur Entwässerung von Schlamm.**

(57) Bei der Entwässerung von Schlamm, insbesondere bei der Entwässerung von organischen Schlämmen mit sehr feinkörnigen Feststoffpartikeln sind verhältnismäßig große Mengen an Flockungsmitteln erforderlich, um eine wirtschaftliche Trennung, das heißt hoher Gehalt an Trockenstoffen im Feststoffaustrag sowie weitestgehend freier Flüssigkeitsablauf, in einer Vollmantel- Schnekkenzentrifuge zu erreichen. Da die Flockungsmittel verhältnismäßig teuer sind, ist die Entwässerung des Schlammes mit verhältnismäßig hohen Betriebskosten verbunden. Erfindungsgemäß wird jedoch dies dadurch vermieden, daß im Übergangsbereich zwischen dem zylindrischen und dem konischen Trommelmantel (1, 2) der Zentrifuge ein Teil des entwässerten Schlammes rezirkuliert beziehungsweise umgewälzt wird.

EP 0 176 943 A2

./...

Anlage zum Patentgesuch der          – 1 –          K H D
Klöckner-Humboldt-Deutz                              H 84/46
Aktiengesellschaft


## Verfahren und Vorrichtung zur Entwässerung von Schlamm

Die Erfindung bezieht sich auf ein Verfahren zur Entwässerung von Schlamm, insbesondere von organischen Schlämmen, in einer Vollmantel-Schneckenzentrifuge mit einem zylindrischen und daran anschließenden konischen Trommelmantel, über den der entwässerte Schlamm von der Förderschnecke ausgetragen wird. Außerdem betrifft die Erfindung eine Vorrichtung zur Durchführung des Verfahrens.

Bei der Entwässerung von Schlamm, insbesondere von organischem Schlamm mit sehr feinkörnigen Feststoffpartikeln, erfolgt die Trennung der Feststoffe von der Flüssigkeit im allgemeinen durch Zusatz von Flockungsmitteln, die eine Agglomerierung der Feststoffpartikel und damit eine Erhöhung der Absetzgeschwindigkeit der Feststoffpartikel im Zentrifugalfeld der Zentrifuge bewirken, wodurch eine erhebliche Verbesserung des

0176943

K H D
H 84/46

Trenneffektes erreicht wird. Der mengenmäßige Bedarf an Flockungsmitteln hängt unter anderem von der Beschaffenheit beziehungsweise Konsistenz des Schlammes und dem Feststoffgehalt im Schlamm ab. Bei der Festlegung der benötigten Menge an Flockungsmitteln müssen daher verschiedene Einflußgrößen berücksichtigt werden. Da die Flockungsmittelzugabe zum Schlamm in manchen Fällen so hohe Betriebskosten verursacht, daß die Entwässerung des Schlamms unwirtschaftlich wird, ist man bestrebt, den Flockungsmittelbedarf bei sonst hoher Effizienz des Trennprozesses möglichst gering zu halten. Dies ist jedoch mit den bisher bekannten Verfahren in den meisten Fällen nicht zu erreichen. Auch wird bei diesen bekannten Verfahren im allgemeinen kein ausreichend hoher Gehalt an Trockenstoffen im Feststoffaustrag erreicht.

Die Aufgabe der Erfindung besteht daher darin, ein Verfahren zu schaffen, das die Entwässerung von Schlamm, insbesondere von organischem Schlamm, unter Aufrechterhaltung eines hohen Trennwirkungsgrades mit möglichst hohem Gehalt an Trockensubstanz im Feststoffaustrag ohne Flockungsmittel oder mit nur ganz geringen Mengen an Flockungsmitteln in einer Vollmantel-Schneckenzentrifuge ermöglicht.

Diese Aufgabe wird dadurch gelöst, daß im Übergangsbereich zwischen dem zylindrischen und dem konischen Trommelmantel der Zentrifuge ein Teil des entwässerten Schlammes rezirkuliert beziehungsweise umgewälzt wird. Die Rezirkulation des entwässerten Schlammes kann in einfacher Weise durch die Anordnung von Ausnehmungen, insbesondere Öffnungen in der Schneckenwendel erreicht werden. Durch diese Rezirkulation eines Teils des entwässerten Schlamms im Übergangsbereich zwischen dem

zylindrischen und dem konischen Trommelmantel erfolgt eine Umwälzung des Schlammes in diesem Bereich, durch die, wie die Praxis gezeigt hat, ohne Flockungsmittelzugabe eine wesentliche Verbesserung der Entwässerung erreicht wird. So konnte durch diese erfindungsgemäße Maßnahme bei der Entwässerung eines Schlammes mit sehr feinkörnigem Feststoffgehalt der Trockensubstanzgehalt im Zentrifugenaustrag auf 35 bis 40 Prozent erhöht werden, was bisher nur unter Zusatz von entsprechenden Mengen an Flockungsmitteln zum Schlamm zu erreichen war.

Der Trockensubstanzgehalt des entwässerten Schlammes kann weiterhin auch dadurch sehr vorteilhaft verbessert werden, daß der entwässerte Schlamm mit einer Lösung, insbesondere mit einer Aldehyd-Lösung, nachbehandelt beziehungsweise gewaschen wird. Das Nachbehandeln bzw. Waschen des entwässerten Schlammes mit einer Lösung kann hierbei sehr vorteilhaft bei einer Vollmantel-Schneckenzentrifuge im anschließendem Siebteil vorgenommen werden, da hierbei sehr vorteilhaft die Lösung zusammen mit der aus dem Feststoff austretenden Flüssigkeit durch die Sieböffnungen nach außen abfließen und dadurch von den Feststoffen getrennt werden kann. Diese Nachbehandlung mit einer Lösung, insbesondere mit einer Aldehyd-Lösung, ist besonders bei der Entwässerung von organischen Schlämmen sehr wirksam, da bei der Behandlung des Schlammes mit einer derartigen Lösung ein Teil des Zellwassers aus den organischen Zellen ausgetrieben und dadurch eine wirksame Nachentwässerung erreicht wird.

Ferner kann eine Verbesserung der Schlammentwässerung gemäß der Erfindung auch dadurch erreicht werden, daß der Schlamm vor der Entwässerung mit Hilfe von Säuren, Metallsalzen oder dergleichen auf einen pH-Wert unter 5, vorzugsweise auf einen pH-Wert zwischen 2,5 bis 4, eingestellt wird. Durch diese Behandlung des Schlammes vor der Entwässerung mit Hilfe von Säuren oder Metallsalzen wird bei der Entwässerung die Sedimentation der im Schlamm vorhandenen Feststoffe beschleunigt und die Feststoffe auch zu Agglomeraten kompaktiert, so daß die auf diese Weise zusammengeballten Feststoffe in der Zentrifuge sehr leicht von der Flüssigkeit getrennt werden können. Es ist hierbei verständlich, daß der auf diese Weise entwässerte Schlamm, bevor er aus der Zentrifuge abgeführt und deponiert wird, mit Hilfe von Kalkmilch oder dergleichen neutralisiert werden muß. Dies ist jedoch mit geringem Arbeits- und Kostenaufwand zu bewerkstelligen.

Schließlich kann der Trockensubstanzgehalt im Zentrifugenaustrag auch dadurch sehr vorteilhaft verbessert beziehungsweise erhöht werden, indem zusätzlich zu den vorhin angeführten erfindungsgemäßen Maßnahmen dem Schlamm vor der Entwässerung auch noch Flockungsmittel zugegeben werden. Die Flockungsmittelzugabe zum Schlamm kann jedoch hierbei so gering gehalten werden, daß hierdurch keine nennenswerte Erhöhung der Betriebskosten verursacht wird.

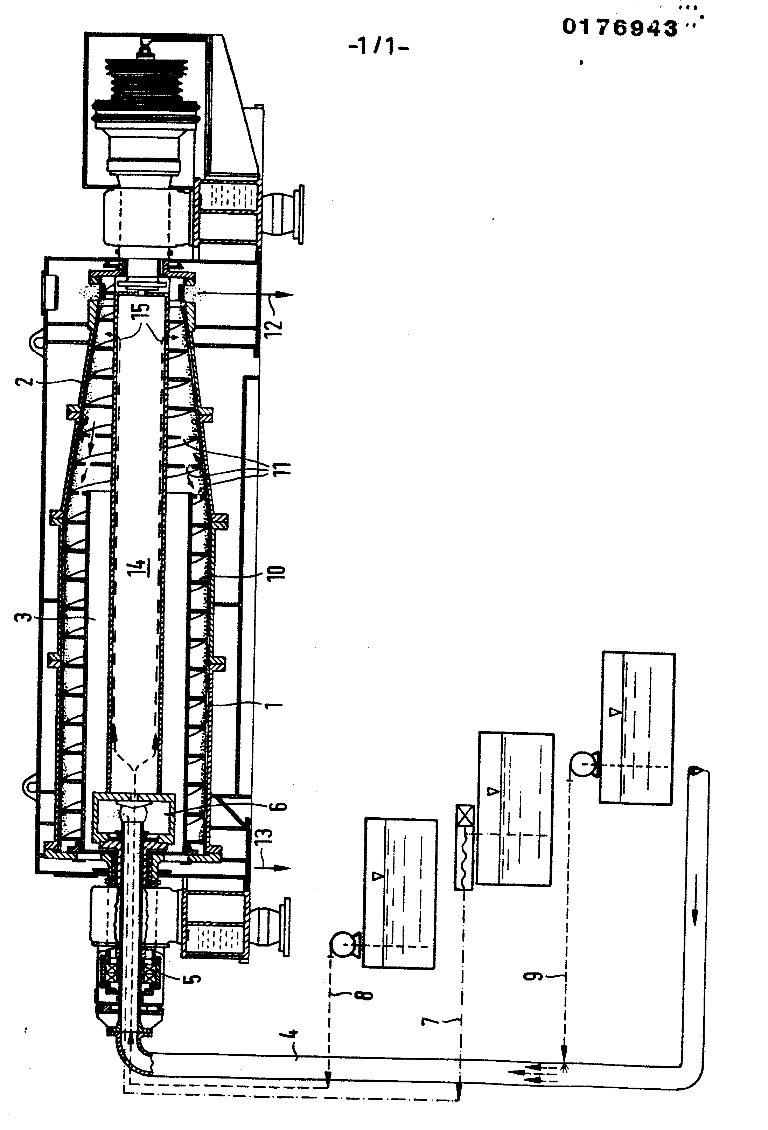

Die Durchführung des Verfahrens gemäß der Erfindung wird nachfolgend anhand einer in der Zeichnung schematisch dargestellten Vorrichtung näher erläutert.

Die in der Zeichnung im Längsschnitt dargestellte Vollmantel-Schneckenzentrifuge weist einen zylinderförmigen Trommelmantel 1 und einen daran anschließenden konischen Trommelmantel 2 auf. Innerhalb dieser Trommelmäntel 1 und 2 ist koaxial eine Förderschnecke

0176943
K H D
H 84/46

3 angeordnet, die im Betrieb der Schneckenzentrifuge mit unterschiedlichen Drehzahlen gegenüber dem Trommelmantel angetrieben wird. Auf der linken Seite ist an der Vollmantel- Schneckenzentrifuge eine Zuleitung 4 für den zu entwässernden Schlamm angeschlossen, die axial durch die hohle Antriebswelle 5 der Förderschnecke 3 hindurchgeführt ist und die in eine Schlammverteilerkammer 6 mündet. Durch die Schlammzuführungsleitung 4 beziehungsweise Antriebswelle 5 sind noch zwei weitere Leitungen 7 und 8 hindurchgeführt, wobei die Leitung 7 der Zuführung von Flockungsmitteln in die Verteilerkammer 6 dient, während die Leitung 8 für die Zuführung von Kalkmilch oder einer Lösung, insbesondere einer Aldehydlösung in den konischen Trommelmantel 2 vorgesehen ist. Ferner ist an die Schlammzuführungsleitung 4 eine Leitung 9 für die Zumischung von Abfallsäuren oder Metallsalzen zum Schlamm angeschlossen.

Die Schneckenwendel 10 der Förderschnecke 3 ist im Übergangsbereich zwischen dem zylindrischen Trommelmantel 1 und dem konischen Trommelmantel 2 mit Öffnungen 11 versehen, über die im Betrieb der Schneckenzentrifuge ein Teil des entwässerten Schlammes ständig rezirkuliert beziehungsweise umgewälzt wird. Anstatt der Öffnungen 11 kann die Schneckenwendel 10 in diesem Bereich auch sehr vorteilhaft am äußeren Umfang mit Ausnehmungen beziehungsweise Unterbrechungen versehen sein, oder aber es kann auch die Schneckenwendel in radialer Richtung verkürzt ausgebildet sein, um eine Umwälzung des entwässerten Schlammes in diesem Bereich zu erzielen. Der entwässerte Schlamm wird aus dem konischen Trommelmantel 2 in Pfeilrichtung 12 abgeführt, während die Flüssigkeit auf der linken Seite in Pfeilrichtung 13 aus der Zentrifugentrommel abläuft.

0176943
K H D
H 84/46

Im Betrieb dieser in der Zeichnung dargestellten Vollmantel-Schneckenzentrifuge kann, wie die Praxis gezeigt hat, schon allein dadurch eine wesentliche Verbesserung der Schlammentwässerung erreicht werden, daß im Übergangsbereich zwischen dem zylindrischen Trommelmantel 1 und dem konischen Trommelmantel 2 ein Teil des entwässerten Schlammes durch die Öffnungen 11 in der Schneckenwendel rezirkuliert beziehungsweise umgewälzt wird. Weiterhin kann die Entwässerung des Schlammes und damit auch die Trockensubstanz im Zentrifugenaustrag sehr vorteilhaft dadurch erhöht beziehungsweise verbessert werden, indem dem zu entwässernden Schlamm über die Leitung 9 Abfallsäuren oder Metallsalze zugegeben werden und der Schlamm dadurch angesäuert beziehungsweise auf einen pH-Wert unter 5 eingestellt wird. Der auf diese Weise in der Vollmantel-Schneckenzentrifuge entwässerte Schlamm muß verständlicherweise, bevor er die Zentrifuge verläßt, neutralisiert werden. Um dies zu erreichen, wird über die Leitung 8 Kalkmilch durch die Hohlwelle 14 der Förderschnecke hindurchgeführt, von wo sie über in der Zeichnung nicht näher dargestellte Öffnungen in Pfeilrichtung 15 aus der hohlen Schneckenwelle 14 austritt und im konischen Trommelmantel 2 mit dem entwässerten Schlamm vermischt wird.

Ferner kann die Entwässerung des Schlammes auch allein durch Nachbehandlung des entwässerten Schlammes im konischen Trommelmantel 2 dadurch verbessert werden, daß dem entwässerten Schlamm in diesem Bereich eine Lösung, insbesondere eine Aldehydlösung, zugemischt wird. Die Zuführung der Aldehydlösung zum entwässerten Schlamm erfolgt hierbei über die Zuleitung 8 und Hohlwelle 14, und zwar auf demselben Wege wie die Kalkmilchzugabe.

Schließlich kann eine Verbesserung der Schlammentwässerung unter Aufrechterhaltung eines hohen Trennwirkungsgrades mit möglichst hohem Gehalt an Trockensubstanz im Feststoffaustrag auch dadurch erreicht werden, daß dem zu entwässernden Schlamm über die Leitung 7 noch zusätzlich geringe Mengen an Flockungsmitteln zugeführt werden.

Durch alle diese vorhin erwähnten erfindungsgemäßen Maßnahmen, sei es einzeln oder in Kombination, kann in einfacher und kostensparender Weise die Entwässerung von Schlamm, insbesondere von organischen Schlämmen, ganz wesentlich verbessert werden.

## Patentansprüche

1. Verfahren zur Entwässerung von Schlamm, insbesondere von organischen Schlämmen, in einer Vollmantel-Schneckenzentrifuge mit einem zylindrischen und daran anschließenden konischen Trommelmantel, über den der entwässerte Schlamm von der Förderschnecke ausgetragen wird, dadurch gekennzeichnet, daß im Übergangsbereich zwischen dem zylindrischen und dem konischen Trommelmantel der Zentrifuge ein Teil des entwässerten Schlammes rezirkuliert beziehungsweise umgewälzt wird.

2. Verfahren nach Anspruch 1, dadurch gekennzeichnet, daß der entwässerte Schlamm in der Zentrifuge mit einer Lösung, insbesondere mit einer Aldehydlösung, nachbehandelt wird.

3. Verfahren nach Anspruch 1 oder 2, dadurch gekennzeichnet, daß der Schlamm vor der Entwässerung mit Hilfe von Säuren oder Metallsalzen auf einen pH-Wert unter 5, vorzugsweise auf einen pH-Wert zwischen etwa 2,5 bis 4, eingestellt wird, und der entwässerte Schlamm anschließend mit Hilfe von Kalkmilch oder dergleichen neutralisiert wird.

4. Verfahren nach Anspruch 1, 2 oder 3, dadurch gekennzeichnet, daß dem Schlamm vor der Entwässerung Flockungsmittel zugegeben werden.

5. Vorrichtung zur Durchführung des Verfahrens nach den vorhergehenden Ansprüchen 1 bis 4, gekennzeichnet durch eine Vollmantel-Schneckenzentrifuge mit einem zylindrischen und daran anschließenden konischen Trommelmantel (1, 2), mit Zuleitungen (4, 7, 8, 9) für den zu entwässernden Schlamm und die Reagenzien, sowie mit getrennten Austrägen (12, 13) für den entwässerten Schlamm und die Flüssigkeit sowie mit am äußeren Umfang der Schneckenwendel (10) der Förderschnecke (3)
im Übergangsbereich zwischen dem zylindrischen und dem
konischen Trommelmantel (1, 2) angeordneten Ausnehmungen, insbesondere Öffnungen (11).

0176943